Europäisches Patentamt

European Patent Office

Office européen des brevets

(19)

(11)     **EP 0 816 285 B1**

(12)     **FASCICULE DE BREVET EUROPEEN**

(45) Date de publication et mention
de la délivrance du brevet:
**15.01.2003   Bulletin 2003/03**

(51) Int Cl.⁷: **C01B 7/09**, F23D 14/62,
B01J 12/00

(21) Numéro de dépôt: **97401421.9**

(22) Date de dépôt: **19.06.1997**

(54) **Procédé de production de bromure d'hydrogène gazeux et dispositif pour sa mise en oeuvre**

Verfahren zur Herstellung von gasförmigem Wasserstoffbromid und Vorrichtung zu dessen Durchführung

Process for the production of gaseous hydrogen bromide and apparatus for carrying out said process

(84) Etats contractants désignés:
**AT BE CH DE DK ES FI FR GB GR IE IT LI LU NL PT SE**

(30) Priorité: **28.06.1996  FR 9608116**

(43) Date de publication de la demande:
**07.01.1998   Bulletin 1998/02**

(73) Titulaires:
• **LE CARBONE-LORRAINE**
  **92400 Courbevoie (FR)**
• **Atofina**
  **92800 Puteaux (FR)**

(72) Inventeurs:
• **Daire, Sylvie**
  **13220 Chateauneuf-Les-Martigues (FR)**
• **Nodari, Thierry**
  **54000 Nancy (FR)**
• **Drivon, Gilles**
  **69850 Saint-Martin-en-Haut (FR)**
• **Leydecker, Michel**
  **54530 Pagny-Sur-Moselle (FR)**

(56) Documents cités:
**EP-A- 0 309 838          DE-A- 2 738 744**
**DE-C- 428 225            FR-A- 2 365 516**
**US-A- 2 070 263**

## Description

L'invention concerne un procédé de production de bromure d'hydrogène pur par combustion directe du brome dans l'hydrogène.

L'invention concerne également un dispositif pour la mise en oeuvre du procédé.

Dans le brevet US 2070263, on décrit une méthode pour obtenir des solutions aqueuses d'acide bromhydrique qui consitste dans une première étape, à faire passer de l'hydrogène à travers du brome liquide maintenu à une température comprise entre 37°C et 42°C pour former un mélange de brome et d'hydrogène gazeux qui est brûlé à une température comprise entre 600°C et 850°C. En opérant de cette façon il est difficile d'avoir un mélange intime de brome et d'hydrogène en des quantités stoechiométriques du fait des difficultés à pouvoir maintenir rigoureusement les températures et les équilibres thermodynamiques.

Il a également été observé, dans des dispositifs basés sur la combustion directe du brome dans l'hydrogène selon un rapport molaire $H_2/Br_2$ supérieur à 1, et pour lesquels on ne mentionne aucune technique de mélange des réactifs, une instabilité de la flamme de combustion qui se manifeste notamment par un fort vacillement de celle-ci en sortie du brûleur allant jusqu'à un décrochage de la flamme ("blow off") dudit brûleur ce qui peut entraîner un risque d'explosion et une qualité du bromure d'hydrogène gazeux produit fluctuante.

De plus, de telles flammes s'allongent en formant des cônes présentant à la base des zones par lesquelles les réactifs sont susceptibles de s'échapper sans être brûlés.

Ceci perturbe la combustion du brome dans l'hydrogène et entraîne notamment du brome résiduel dans les gaz de combustion ce qui est de nature à provoquer une diminution importante de la durée de vie des brûleurs, à limiter la gamme de matériaux utilisables et à dégrader la qualité du bromure d'hydrogène gazeux empêchant ainsi son utilisation comme réactif pour des synthèses en aval (réactions secondaires, colorations des produits) ou bien pour la préparation de solutions d'acide bromhydrique.

Le brevet FR 2 365 516 propose un procédé permettant d'améliorer la stabilité de la flamme résultant de la combustion du brome dans l'hydrogène en établissant un courant hélicoïdal de brome dans une enceinte cylindrique puis à injecter l'hydrogène radialement vers l'extérieur dans le courant hélicoïdal de brome et à alimenter en continu avec le courant hélicoïdal de brome et d'hydrogène, une flamme à proximité de l'enceinte.

Ce procédé, en utilisant un excès molaire d'hydrogène de 2,6 %, conduit à un HBr gazeux contenant 300 ppm de brome en volume, ce qui provoque encore des colorations des produits de synthèse en aval ainsi que les inconvénients mentionnés précédemment.

En outre, la complexité du brûleur entraîne un manque de flexibilité. Ainsi, notamment, dans l'éventualité où l'on désire accroître la capacité dudit dispositif, on dispose plusieurs brûleurs côte à côte dans une même enceinte. Dans un tel montage, on ne peut éviter que les flammes des différents brûleurs montés en parallèle s'interfèrent et de plus cette disposition est rédhibitoire pour obtenir une bonne répartition des réactifs. Cette configuration entraîne inévitablement un abaissement du taux de transformation du brome, complique la maîtrise du refroidissement de l'HBr formé et augmente les risques d'explosion.

On a maintenant trouvé un procédé de préparation de bromure d'hydrogène pur gazeux par combustion directe du brome dans l'hydrogène selon la réaction $H_2 + Br_2 \rightarrow 2HBr$, caractérisé en ce qu'il consiste à effectuer successivement les étapes ci-après :

> ➢ réaliser dans une enceinte un mélange intime d'hydrogène et d'un comburant sous une pression égale ou supérieure à la pression atmosphérique,
> ➢ initier une flamme en sortie de ladite enceinte,
> ➢ remplacer en partie ou en totalité le comburant par un courant de brome, préalablement vaporisé, avec un rapport molaire $H_2/Br_2$ approprié pour entretenir à la sortie de ladite enceinte et dans une zone dite de combustion une flamme stable permettant d'obtenir une combustion complète du brome dans l'hydrogène,
> ➢ refroidir les gaz de combustion dans une zone de refroidissement, puis,
> ➢ récupérer un courant gazeux de bromure d'hydrogène sous une pression au moins égale à 1 bar absolu et de préférence sous une pression comprise entre 1,3 bars absolus et 10 bars absolus et à une température au plus égale à 125° C et, de préférence, comprise entre 40°C et 125°C.

Selon la présente invention, on peut utiliser comme comburant tout mélange constitué par un gaz inerte vis à vis des réactifs de la réaction de formation de HBr et par une quantité d'oxygène suffisante pour pouvoir conduire à un mélange combustible avec l'hydrogène. Comme gaz inerte, on pourra utiliser l'azote. De préférence, le comburant est de l'air.

Selon la présente invention, le comburant peut être remplacé en totalité ou en partie. Dans l'éventualité où une certaine quantité de comburant est maintenue, cette quantité peut varier dans une large mesure laquelle est fonction notamment des impuretés organiques présentes dans le courant de brome gazeux d'alimentation, des caractéristiques dimensionnelles de l'appareillage et de l'utilisation aval de l'HBr produit.

L'hydrogène et le comburant sont introduits gazeux dans l'enceinte à température ambiante. Lorsque la flamme est initiée, le comburant est remplacé par du brome gazeux introduit à une température légèrement supérieure à sa température d'ébullition.

La pression dans l'enceinte est au moins égale à 1 bar absolu, de préférence supérieure à 1,3 bars absolus et, plus encore comprise entre 1,8 bars absolus et 10 bars absolus.

On ne sortirait pas du cadre de l'invention si la pression était légèrement inférieure à la pression atmosphérique.

Le rapport molaire $H_2/Br_2$ est supérieur à 1. De préférence, le rapport molaire $H_2/Br_2$ est supérieur à 1 et inférieur à 1,4. La demanderesse a constaté que dans les conditions réactionnelles de la présente invention, le brome est consommé instantanément d'une façon quasi complète.

La réaction du brome et de l'hydrogène s'accompagne d'un dégagement de chaleur (12,3 Kcalories par mole de HBr gazeux formé) qui élève à plus de 1 600° C la température de la flamme de combustion dans des conditions adiabatiques.

Selon la présente invention, le refroidissement du bromure d'hydrogène formé commence dès sa formation dans la zone de combustion puis ensuite se poursuit dans une zone de refroidissement constituée d'une façon telle que la température baisse graduellement dans ces zones et, avoisine, en sortie de la zone de refroidissement, 60° C et de préférence, est comprise entre 40° C et 125° C. La pression régnante dans ladite zone de refroidissement est au moins égale à 1 bar absolu et, de préférence, comprise entre 1,3 bars absolus et 10 bars absolus.

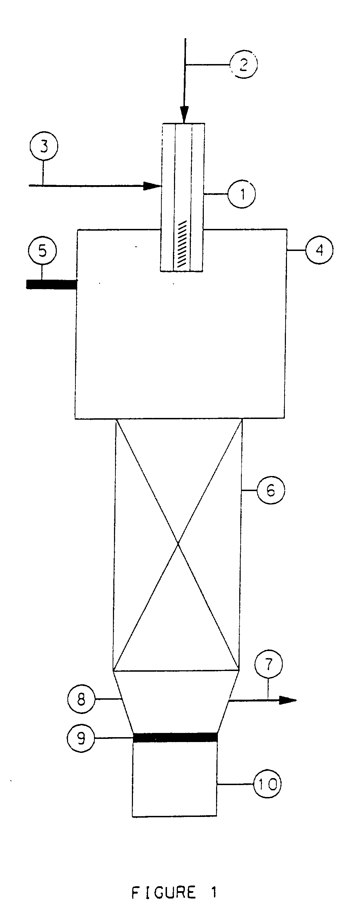

Ce procédé peut être mis en oeuvre au moyen d'un dispositif tel que représenté schématiquement sur la figure 1.

Ce dispositif, comprend successivement :

- un brûleur (1) comprenant des moyens (2) pour introduire, le brome et/ou le comburant, des moyens (3) pour introduire l'hydrogène et des moyens pour mettre en contact lesdits réactifs,
- une chambre de combustion (4),
- des moyens (5) pour initier une flamme,
- des moyens (6) pour refoidir les gaz de combustion (HBr),
- des moyens d'évacuation (7 et 8) des gaz de combustion (HBr), et
- des organes de sécurité (9) et (10).

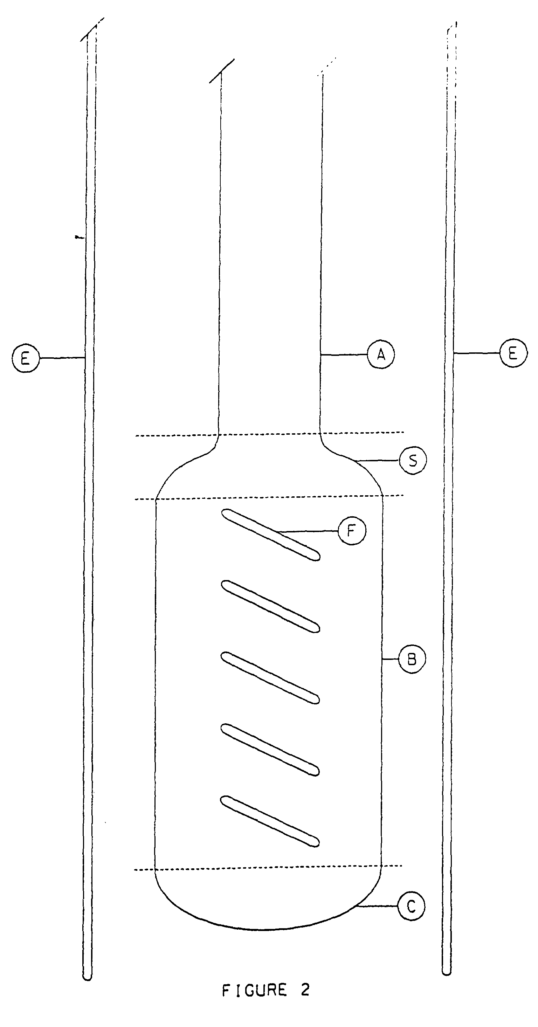

Selon la présente invention, le brûleur (1) est constitué d'une enceinte (E) verticale à l'intérieur de laquelle est placé un tube cylindrique vertical, tel que représenté sur la figure 2, constitué de :

- une partie supérieure cylindrique (A) ouverte de longueur L1 et de diamètre D1,
- une partie inférieure cylindrique (B) de longueur L2 et de diamètre D2, avec D2 > D1, laquelle partie inférieure (B) est terminée par une calotte sphérique (C). La partie (B) est munie d'orifices de préférence inclinés (F).

Les parties (A) et (B) sont réunies par un segment sphérique (S).

Les valeurs L1, L2, D1, D2 et le nombre d'orifices (F) déterminent la flexibilité du dispositif. L'homme de l'art adaptera ces valeurs à la capacité requise et aux contraintes d'exploitation de l'installation.

Selon la présente invention, le brome et/ou le comburant sont introduits par (2) directement dans le tube vertical à la partie supérieure de la partie cylindrique (A) et l'hydrogène est introduit par (3), de preférence d'une façon perpendiculaire au tube vertical et à l'intérieur du volume constitué par l'enceinte (E) et ledit tube vertical.

L'enceinte, ainsi que le tube vertical peuvent être constitués en matériaux réfractaires tels que silice ou quartz, ou bien encore en un métal ayant une résistance adaptée à la qualité des réactifs tel que le nickel.

Selon la présente invention, la base du brûleur émerge dans la chambre de combustion (4) qui est avantageusement refroidie.

Cette chambre de combustion est munie de moyens (5) pour initier la flamme. La flamme peut être initiée par un organe d'allumage apportant l'énergie nécessaire au démarrage. Ce peut être un petit brûleur auxiliaire par l'intermédiaire d'un hublot (non représenté sur la figure 1).

Cette chambre de combustion peut être constituée de graphite imprégné avec des résines phénoliques ou des polymères fluorés avec une 5 double enveloppe externe en acier dans laquelle circule un fluide de refroidissement.

Selon la présente invention, le graphite imprégné doit posséder des caractéristiques de résistance thermique, mécanique et chimique adaptées au procédé.

A titre d'illustration de tel graphite imprégné utilisable selon la présente invention, on citera les GRAPHILOR® HB, TH, GH commercialisés par la société Carbone Lorraine.

La zone de refroidissement (6) selon la présente invention est constituée par une enveloppe en acier dans laquelle se trouvent empilés des blocs en graphite imprégné.

Selon la présente invention, ces blocs, sont constitués de canaux axiaux dans lesquels les gaz de combustion circulent, et de canaux radiaux dans lesquels circule de l'eau ou une saumure froide.

Selon la présente invention, le nombre de blocs à utiliser peut varier dans une large mesure. Il est calculé de façon à ce que la température des gaz de combustion arrivant dans le pot inférieur (8) soit au plus égale à 125°C et, de préférence comprise entre 40° C et 60° C.

Selon la présente invention, les moyens d'évacuation (8) des gaz de combustion (HBr) sont constitués par un pot inférieur, notamment en PVDF fretté avec une enveloppe externe en acier.

Ce pot est équipé d'une sortie latérale (7) pour le gaz produit et d'organes de sécurité tel qu'un disque de rupture (9) qui est en liaison avec un pare-éclats (10).

Selon la présente invention, la chambre de combustion est avantageusement équipée d'un ou plusieurs hublots situés le plus proche de la flamme.

Ces hublots peuvent notamment permettre le contrôle visuel de la flamme et l'introduction des moyens d'allumage.

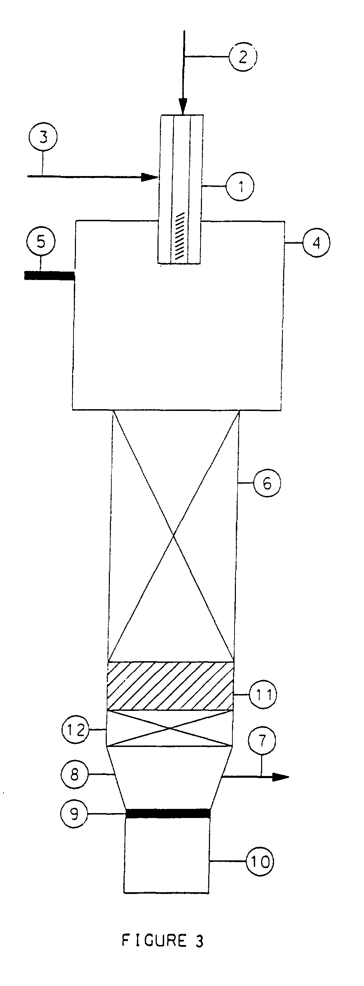

Ce procédé conforme à l'invention peut également être mis en oeuvre au moyen d'un dispositif particulier tel que représenté schématiquement sur la figure 3.

Dans ce dispositif, un étage de finition (11) a été intercalé entre la zone de refroidissement (6) et le pot (8).

Cet étage de finition est constitué par une double-enveloppe en acier dans laquelle se trouve une charge catalytique tel que du charbon actif.

Dans la double-enveloppe peut circuler de l'eau ou une saumure de refroidissement.

Selon cette variante, la température des gaz entrant dans cet étage de finition peut être compris entre 150°C et 200°C.

On ne sortirait pas du cadre de l'invention si on incorporait après l'étage de finition (11) une zone de refoidissement (12) comprenant au moins un bloc en graphite imprégné.

Ce procédé conforme à l'invention présente une grande flexibilité, tout en assurant une grande sûreté de fonctionnement et une bonne opérabilité.

Pour un dimensionnement donné de la chambre de combustion et de la zone de refoidissement on peut faire varier dans une grande mesure les débits d'entrée des réactifs. Ceci est permis par le fait que l'on peut changer aisément le brûleur.

Ce procédé présente aussi l'avantage de conduire à un bromure d'hydrogène très pur à une pression suffisante, ce qui permet de l'utiliser soit comme réactif en synthèse organique, soit pour préparer des solutions HBr pur sans l'utilisation de moyens coûteux de recompression et de purification.

En outre, ce procédé permet d'obtenir des évents gazeux sans brome.

L'exemple qui suit illustre l'invention.

On utilise un générateur tel que représenté sur la figure 1, comprenant :

-   un brûleur, constitué par une enceinte verticale en quartz à l'intérieur de laquelle se trouve un tube vertical tel que schématisé sur la figure 2,
-   une chambre de combustion de diamètre égal à 250 mm constituée par du GRAPHYLOR® type HB et de hauteur égale à 1200 mm.

Cette chambre est refroidie par de l'eau de température d'entrée égale à 28°C,

-   une zone de refroidissement munie de 5 blocs en graphite imprégné GRAPHYLOR® type HB refroidie par une circulation d'eau,

-   un pot (8) en PVDF fretté,
-   une évacuation (7)
-   un disque de rupture (9) et un pare-éclats (10)

Le générateur est équipé de deux hublots diamétralement opposés, disposés sur les parois de la chambre de combustion au niveau de la partie basse du brûleur.

Le dimensionnement des équipements précédemment mentionnés ont été déterminés pour produire par jour une quantité de bromure d'hydrogène pur allant de 1,4 à 9,6 tonnes.

On alimente le brûleur avec les réactifs ci-après :

 ➢ Hydrogène :

-   débit 5 kg/h
-   pression : 3 bars absolus
-   température : 25° C

 ➢ Air (agent comburant) :

-   débit : 30 kg/h
-   pression : 3 bars absolus
-   température : 30° C

On initie une flamme au moyen du dispositif (5) constitué par un brûleur pilote $H_2$/air projetant une flamme par l'un des 2 hublots.

La flamme initiée,on substitue le courant d'air par un courant de brome gazeux :

-   débit : 395 kg/h
-   pression : 3 bars
-   température : 95° C
-   teneur en eau : < 0,01 %
-   teneur en chlore : < 0,05 %

On peut observer par le hublot l'aspect de la flamme. Une cellule adaptée sur l'un des hublots permet de nous indiquer avec précision les proportions des réactifs de combustion (couleur de la flamme) et par suite nous permet d'ajuster les débits.

Le générateur fonctionne en continu produisant 400 kg/h d'HBr gazeux dont au moins 399,9 kg HBr pur sortant en (7) à 40°C et sous une pression de 1,8 bars absolus. Le bromure d'hydrogène obtenu contient moins de 50 mg de brome par kg de HBr.

**Revendications**

**1.** Procédé de préparation de bromure d'hydrogène par combustion directe du brome dans l'hydrogène selon la réaction $H_2 + Br_2 \rightarrow 2HBr$, **caractérisé en ce qu'**il consiste à effectuer successivement les étapes ci-après :

- réaliser dans une enceinte un mélange intime d'hydrogène et d'un comburant sous une pression égale ou supérieure à la pression atmosphérique,
- initier une flamme en sortie de ladite enceinte,
- remplacer en partie ou en totalité le comburant par un courant de brome, préalablement vaporisé, avec un rapport molaire H2/Br2 approprié pour entretenir à la sortie de ladite enceinte et dans une zone dite de combustion une flamme stable, permettant d'obtenir une combustion complète du brome dans l'hydrogène,
- refroidir les gaz de combustion dans une zone de refroidissment, puis,
- récupérer un courant gazeux de bromure d'hydrogène sous une pression au moins égale à un bar absolu et à une température au plus égale à 125°C.

2. Procédé selon la revendication 1, **caractérisé en ce que** le comburant est remplacé en totalité par un courant de brome.

3. Procédé selon la revendication 1, **caractérisé en ce que** le comburant est remplacé en partie par un courant de brome.

4. Procédé selon la revendication 1, **caractérisé en ce que** le comburant est de l'air.

5. Procédé selon la revendication 1, **caractérisé en ce que** la pression dans l'enceinte est au moins égale à 1 bar absolu, de préférence supérieure à 1,3 bars absolus et, plus encore, comprise entre 1,8 bars absolus et 10 bars absolus.

6. Procédé selon la revendication 1, **caractérisé en ce que** le rapport molaire $H_2/Br_2$ est supérieur à 1 et inférieur à 1,4.

7. Procédé selon la revendication 1, **caractérisé en ce que** la pression régnante dans la zone de refroidissement est au moins égale à 1,3 bars absolus et, de préférence comprise entre 1,3 bars absolus et 10 bars absolus.

8. Procédé selon la revendication 1, **caractérisé en ce que** l'on récupère un courant gazeux de bromure d'hydrogène sous une pression comprise entre 1,3 bars absolus et 10 bars absolus et à une température comprise entre 40°C et 125°C.

9. Procédé selon l'une des revendications 1 à 8, **caractérisé en ce qu'**il est mis en oeuvre dans un dispositif comprenant successivement:

- un brûleur (1) constitué d'une enceinte verticale (E) à l'intérieur de laquelle est placé un tube cylindrique vertical constitué d'une partie supérieure cyclindrique (A) ouverte de diamètre D1 reliée à une partie inférieure cylindrque (B) de diamètre D2, avec D2>D1, par un segment sphérique (S), laquelle partie inférieure (B) comprend des orifices inclinés (F) et est terminée par une callotte spérique (C), et comprenant des moyens (2) pour introduire le brome et/ou le comburant et des moyens (3) pour introduire l'hydrogène,
- une chambre de combustion (4),
- des moyens (5) pour initier une flamme,
- des moyens (6) pour refroidir les gaz de combustion,
- des moyens d'évacuation (7 et 8) des gaz de combustion, et,
- des organes de sécurité (9) et (10),

10. Procédé selon la revendication 9, **caractérisé en ce que** la base du brûleur émerge dans la chambre de combustion (4) refroidie.

11. Procédé selon la revendication 9, **caractérisé en ce que** la chambre de combustion (4) est constitué de graphite imprégné.

12. Procédé selon la revendication 11, **caractérisé en ce que** le graphite imprégné est du GRAPHYLOR® type HB, TH ou GH.

13. Procédé selon la revendication 9, **caractérisé en ce que** la zone de refroidissement est constitué par une enveloppe en acier dans laquelle se trouve empilés des blocs en graphite imprégné, lesdits blocs sont constitués de canaux axiaux dans lesquels les gaz de combustion circulent et de canaux radiaux dans lesquels circule de l'eau.

14. Procédé selon la revendication 13, **caractérisé en ce que** le graphite imprégné est du GRAPHYLOR® type HB.

15. Procédé selon la revendication 9, **caractérisé en ce qu'**un étage de finition, constitué par une double-enveloppe en acier dans laquelle se trouve une charge catalytique, est intercalé entre la zone de refroidissement (6) et le pot (8).

16. Procédé selon la revendication 14, **caractérisé en ce que** la charge catalytique est du charbon actif.

**Patentansprüche**

1. Verfahren zur Herstellung von Bromwasserstoff durch direkte Verbrennung von Brom in Wasserstoff

gemäß der Reaktion

$$H_2 + Br_2 \rightarrow 2\ HBr,$$

**dadurch gekennzeichnet,**
**daß** man nacheinander die folgenden Verfahrensschritte durchführt:

- Herstellung einer innigen Mischung aus Wasserstoff und einem Verbrennungsmittel (Oxidationsmittel) in einem geschlossenen Behältnis unter einem Druck gleich oder oberhalb von Atmosphärendruck,

- Zündung einer Flamme am Ausgang des geschlossenen Behältnisses,

- teilweises oder vollständiges Ersetzen des Verbrennungsmittels durch einen Strom von Brom, das zuvor verdampft worden ist, mit einem $H_2/Br_2$-Molverhältnis, welches geeignet ist, um am Ausgang des geschlossenen Behältnisses und in einer sogenannten Verbrennungszone eine stabile Flamme zu unterhalten, wodurch eine vollständige Verbrennung des Broms in dem Wasserstoff ermöglicht wird,

- Abkühlen der Verbrennungsgase in einer Abkühlzone, dann

- Erhalt eines Bromwasserstoffgasstroms unter einem Druck von mindestens einem bar absolut und bei einer Temperatur von höchstens 125 °C.

2. Verfahren nach Anspruch 1, **dadurch gekennzeichnet, daß** das Verbrennungsmittel insgesamt durch einen Bromstrom ersetzt wird.

3. Verfahren nach Anspruch 1, **dadurch gekennzeichnet, daß** das Verbrennungsmittel teilweise durch einen Bromstrom ersetzt wird.

4. Verfahren nach Anspruch 1, **dadurch gekennzeichnet, daß** das Verbrennungsmittel Luft ist.

5. Verfahren nach Anspruch 1, **dadurch gekennzeichnet, daß** der Druck in dem geschlossenen Behältnis mindestens 1 bar absolut, vorzugsweise mehr als 1,3 bar absolut, beträgt und besonders bevorzugt zwischen 1,8 bar absolut und 10 bar absolut liegt.

6. Verfahren nach Anspruch 1, **dadurch gekennzeichnet, daß** das $H_2/Br_2$-Molverhältnis größer als 1 und kleiner als 1,4 ist.

7. Verfahren nach Anspruch 1, **dadurch gekennzeichnet, daß** der Druck, der in der Abkühlzone vorherrscht, mindestens 1,3 bar absolut beträgt und vorzugsweise zwischen 1,3 bar absolut und 10 bar absolut liegt.

8. Verfahren nach Anspruch 1, **dadurch gekennzeichnet, daß** man den Bromwasserstoffgasstrom unter einem Druck zwischen 1,3 bar absolut und 10 bar absolut und bei einer Temperatur zwischen 40 °C und 125 °C erhält.

9. Verfahren nach einem der Ansprüche 1 bis 8, **dadurch gekennzeichnet, daß** es in einer Vorrichtung durchgeführt wird, die nacheinander geschaltet aufweist:

- einen Brenner (Verbrennungseinrichtung) (1), der aus einer vertikalen Einfassung (E) besteht, in deren Inneren ein vertikales zylindrisches Rohr angeordnet ist, das aus einem offenen zylindrischen oberen Teil (A) mit einem Durchmesser D1 besteht, der mit einem zylindrischen unteren Teil (B) mit einem Durchmesser D2, wobei D2 größer D1 ist, über einen runden Abschnitt (S) verbunden ist, wobei der untere Teil (B) geneigte Öffnungen (F) aufweist und durch eine runde Haube (Glokke) (C) abgeschlossen ist, wobei der Brenner (1) Mittel (2) zum Einlaß des Broms und/oder des Verbrennungsmittels und Mittel (3) zum Einlaß des Wasserstoffs aufweist,

- eine Verbrennungskammer (4),

- Mittel (5) zur Zündung einer Flamme,

- Mittel (6) zum Abkühlen der Verbrennungsgase,

- Mittel (7, 8) zum Abziehen (Entfernen) der Verbrennungsgase und

- Sicherheits(absperr)organe (9, 10).

10. Verfahren nach Anspruch 9, **dadurch gekennzeichnet, daß** die Basis des Brenners in die Verbrennungskammer (4) hervorragt.

11. Verfahren nach Anspruch 9, **dadurch gekennzeichnet, daß** die Verbrennungskammer (4) aus imprägniertem Graphit besteht.

12. Verfahren nach Anspruch 11, **dadurch gekennzeichnet, daß** das imprägnierte Graphit GRAPHYLOR® Typ HB, TH oder GH ist.

13. Verfahren nach Anspruch 9, **dadurch gekenn-**

**zeichnet, daß** die Abkühlzone aus einem Stahlmantel besteht, in dem sich gestapelt (geschichtet) Blöcke aus imprägniertem Graphit befinden, wobei die Blöcke aus axialen Kanälen, in denen die Verbrennungsgase zirkulieren, und radialen Kanälen, in denen Wasser zirkuliert, bestehen.

14. Verfahren nach Anspruch 13, **dadurch gekennzeichnet, daß** das imprägnierte Graphit GRAPHYLOR® Typ HB ist.

15. Verfahren nach Anspruch 9, **dadurch gekennzeichnet, daß** eine Endstufe, die aus einem doppelten Stahlmantel besteht, in dem sich eine katalytische Beladung befindet, zwischen der Abkühlzone (6) und dem Topf (8) zwischengeschaltet ist.

16. Verfahren nach Anspruch 14, **dadurch gekennzeichnet, daß** die katalytische Beladung Aktivkohle ist.

## Claims

1. Process for the preparation of hydrogen bromide by direct combustion of bromine in hydrogen according to the reaction $H_2 + Br_2 \rightarrow 2HBr$, **characterized in that** it consists in carrying out the following steps successively:

   - intimately mixing hydrogen and an oxidant in a chamber under a pressure greater than or equal to atmospheric pressure,
   - starting a flame at the outlet of the said chamber,
   - replacing all or part of the oxidant by a stream of prevapourized bromine, in an $H_2/Br_2$ molar ratio:which is sufficient to maintain a stable flame at the outlet of the said chamber and in a so-called combustion zone, thereby making it possible to obtain complete combustion of the bromine in the hydrogen,
   - cooling the combustion gases in a cooling zone, then
   - recovering a flow of hydrogen bromide gas under a pressure at least equal to one bar absolute and at a temperature not above 125°C.

2. Process according to Claim 1, **characterized in that** the oxidant is totally replaced by a stream of bromine.

3. Process according to Claim 1, **characterized in that** the oxidant is partially replaced by a stream of bromine.

4. Process according to Claim 1, **characterized in that** the oxidant is air.

5. process according to Claim 1, **characterized in that** the pressure in the chamber is at least equal to 1 bar absolute, preferably greater than 1.3 bar absolute and even more preferably between 1.8 bar absolute and 10 bar absolute.

6. Process according to Claim 1, **characterized in that** the $H_2/Br_2$ molar ratio is greater than 1 and less than 1.4.

7. Process according to Claim 1, **characterized in that** the pressure prevailing in the cooling zone is at least equal to 1.3 bar absolute and preferably between 1.3 bar absolute and 10 bar absolute.

8. Process according to Claim 1, **characterized in that** a stream of hydrogen bromide gas under a pressure of between 1.3 bar absolute and 10 bar absolute and at a temperature of between 40°C and 125°C is recovered.

9. Process according to one of Claims 1 to 8, **characterized in that** it is implemented in a device successively comprising:

   - a burner (1) consisting of a vertical chamber (E) inside which is placed a vertical cylindrical tube consisting of an open cylindrical upper part (A) of diameter D1 connected to a cylindrical lower part (B) of diameter D2, with D2 > D1, by a spherical segment (S), this lower part (B) comprising inclined orifices (F) and being terminated with a spherical cap (C), and comprising means (2) for introducing the bromine and/or the oxidant and means (3) for introducing the hydrogen,
   - a combustion chamber (4),
   - means (5) for starting a flame,
   - means (6) for cooling the combustion gases,
   - means (7 and 8) for evacuating the combustion gases, and
   - safety members (9) and (10).

10. Process according to Claim 9, **characterized in that** the base of the burner emerges into the cooled combustion chamber (4).

11. Process according to Claim 9, **characterized in that** the combustion chamber (4) consists of impregnated graphite.

12. Process according to Claim 11, **characterized in that** the impregnated graphite is Graphylor® type HB, TH or GH.

13. Process according to Claim 9, **characterized in that** the cooling zone consists of a steel jacket in which are piled blocks of impregnated graphite, the said blocks consisting of axial channels in which the combustion gases circulate and radial channels in which water circulates.

14. Process according to Claim 13, **characterized in that** the impregnated graphite is Graphylor® type HB.

15. Process according to Claim 9, **characterized in that** a finishing stage, consisting of a steel jacket in which there is a catalytic charge, is placed between the cooling zone (6) and the pot (8).

16. Process according to Claim 14, **characterized in that** the catalytic charge is active charcoal.

FIGURE 1

FIGURE 2

FIGURE 3